# EUROPÄISCHE PATENTSCHRIFT

(11) **EP 1 688 326 B1**
(45) Veröffentlichungstag und Bekanntmachung des Hinweises auf die Patenterteilung: **28.07.2010**
(21) Anmeldenummer: 05026414.2
(22) Anmeldetag: 03.12.2005
(51) Int. Cl.: B60R 25/00

(54) **Schließsystem für ein Fahrzeug**
Locking system for motor vehicle
Système de verrouillage pour véhicule.

(30) Priorität: 04.02.2005 DE 102005005161; 17.03.2005 DE 102005012289; 21.07.2005 DE 102005034097
(43) Veröffentlichungstag der Anmeldung: 09.08.2006
(73) Patentinhaber: Volkswagen Aktiengesellschaft, 38436 Wolfsburg (DE)
(72) Erfinder: Grave, Dietmar, 38116 Braunschweig (DE); Wick, Christian, 38162 Cremlingen (DE); Grossmann, Markus, 38518 Gifhorn (DE)

(56) Entgegenhaltungen:
- EP-A- 1 479 575
- DE-A1- 10 202 330
- DE-A1- 10 221 511
- US-B1- 6 218 932

## Beschreibung

Die vorliegende Erfindung betrifft ein Schließsystem und Komponenten eines Schließsystems für ein Fahrzeug. Darüber hinaus betrifft die vorliegende Erfindung ein Verfahren zur Ermittlung einer Zugangsberechtigung zu einem Fahrzeug, sowie ein Verfahren zum Öffnen eines Fahrzeugs und ein Verfahren zum Verschließen eines Fahrzeugs.

Bei sogenannten Keyless-Entry-Systemen wird die Zugangsberechtigung zu einem Kraftfahrzeug ohne ein Einführen eines Schlüssels in ein Fahrzeugschloss ermittelt. Stattdessen kann beispielsweise ein kapazitiver Sensor ein Betätigen eines Türgriffs durch einen Fahrer erfassen und ein entsprechendes Aktivierungssignal an eine Steuereinheit bereitstellen. Diese Steuereinheit aktiviert zwei Antennen so, dass die Antennen ein niederfrequentes, elektromagnetisches Signal, beispielsweise im Frequenzbereich von 100 kHz, erzeugen. Die Antennen sind üblicherweise im Bereich der Fahrzeugtüren angeordnet und das erzeugte elektromagnetische Feld ist in einem Abstand von ca. 1,5 bis 2 m vom Fahrzeug nutzbar. Das elektromagnetische Feld aktiviert einen sogenannten ID-Geber, der die Funktion eines Fahrzeugschlüssels hat und der die Berechtigung zum Zugang des Fahrzeugs verleiht.

Grundsätzlich soll bei einem derartigen Keyless-Entry-System vermieden werden, dass eine unberechtigte Person das Fahrzeug öffnet, wenn sich eine berechtigte Person, welche den ID-Geber mit sich führt, in der Nähe des Fahrzeugs befindet. Daher muss ermittelt werden, ob das Eingreifen in den Türgriff auf der gleichen Seite des Fahrzeugs erfolgt, auf der sich auch der ID-Geber befindet. Aus diesem Grund ist eine entsprechende LF-Antenne (Low Frequency), sowohl auf der Fahrer- als auch auf der Beifahrerseite angeordnet. Im Idealfall wird nur auf derjenigen Seite das LF-Wechselfeld ausgesandt, auf welcher der Türgriff betätigt wurde.

Bedingt durch die physikalischen Eigenschaften der Karosserie kann das LF-Wechselfeld auch in ungewünschte Bereiche und insbesondere auch auf die gegenüberliegende Fahrerseite geleitet werden. Auch kann eine Antenne, die im Bereich der Heckklappe angeordnet ist, auf die Fahrer- und Beifahrerseite strahlen. Beispielsweise ist es möglich, dass ein ID-Geber, der sich in der Nähe der A-Säule auf der Beifahrerseite befindet, durch das Feld der Antenne auf der Fahrerseite angesprochen wird, da das Feld über die Karosserie ungünstigerweise diesen Bereich bestrahlt.

Die US 6,218,932 B1, die als Basis für den Oberbegriff der unabhängigen Ansprüche dient, beschreibt ein Gerät zur Diebstahlsicherung eines Fahrzeugs. Dabei können unterschiedliche Antennen mit einem vorgegebenen Strom beaufschlagt werden. Die Feldstärke wird jeweils an einem Transponder gemessen und an das Fahrzeug übermittelt. Falls die gemessenen Feldstärken gleich sind, wird eine der Antennen mit einem anderen Strom beaufschlagt, um zu ermitteln, ob die von dem Transponder gemeldete gemessene Feldstärke sich verändert.

Die DE 102 02 330 A1 beschreibt ein Schließsystem für ein Kraftfahrzeug, bei dem ein ID-Geber eine Feldstärke eines elektromagnetischen Signals ermittelt, um den Standort des ID-Gebers in Bezug auf die das elektromagnetische Signal erzeugende Einrichtung bestimmen zu können. Mehrere Sender können vorgesehen sein, um den Standort des ID-Gebers in der Art einer Schnittpunktbestimmung zu bestimmen.

Die EP 1 479 575 A1 beschreibt eine Aktivierung einer elektronischen Schaltung in einem Kraftfahrzeug, wobei ein Bereich der Fahrzeugumgebung überwacht und bei Eindringen einer Person oder eines Gegenstandes in den überwachten Bereich ein Aktivierungssignal erzeugt wird.

Die DE 102 21 511 A1 beschreibt eine schlüssellose Sicherheitseinrichtung für Kraftfahrzeuge, die zwei oder mehr Sensoren aufweist, die je nach dem Zeitmuster ihrer Beaufschlagung unterschiedliche Bedienfunktionen einleiten.

Ein weiterer Nachteil herkömmlicher Keyless-Entry-Systeme besteht darin, dass, wie in dem oberen Beispiel geschildert, die Aktivierung der Antennen über ein Betätigen eines Türgriffs erfolgt. Dabei besteht das Problem, dass bei dem Keyless-Entry-System bei einem sehr schnellen Zug an dem Türgriff das Fahrzeug oftmals noch nicht entriegelt ist. Man bezeichnet diesen Vorgang oft auch als "Verhaken".

Des Weiteren ist das Anordnen eines kapazitiven Sensors zur Erfassung einer Betätigung eines Türgriffs mit dem Nachteil von hohen Kosten verbunden. Auch ist es unvorteilhaft, wenn die Heckklappe nur über einen dazu am Fahrzeugheck angebrachten Taster ver- oder entriegelt werden kann. Zusätzlich ist es wünschenswert, dass sich ein Fahrzeug mit einem Keyless-Entry-System leichter verschließen lässt, als dies bisher der Fall ist.

Außer dem oben vorgestellten Schließsystem gibt es noch weitere Möglichkeiten, ein Fahrzeug zu öffnen, ohne dass ein Schlüssel in ein Schloss des Fahrzeugs eingeführt wird. So kann beispielsweise über einen Funkschlüssel ein Funksignal an eine Fahrzeugschlosseinrichtung ausgegeben werden, welches ein Aufschließen oder ein Verriegeln des Fahrzeugs bewirkt.

Vorzugsweise verfügt der Funkschlüssel zusätzlich über eine Anzeigeeinrichtung, so dass ein Fahrer beispielsweise erkennen kann, ob auf seine Eingabe hin das Fahrzeug verriegelt wurde oder nicht. Allerdings weisen herkömmliche Funkschlüssel mit einer Anzeigeeinrichtung eine größere und unhandlichere Form auf. Dies erschwert beispielsweise die Aufbewahrung des Funkschlüssels in einer Tasche der Kleidung des Fahrers.

Verfügt ein Funkschlüssel hingegen über keine derartige Anzeigeeinrichtung, oder wird das Fahrzeugschloss über einen ID-Geber geschaltet, so stellt sich das Problem, dass der Benutzer beim Öffnen oder Verschließen eines Fahrzeugs keine Rückkopplung erhält. Im Gegensatz zu den Fahrzeugschlössern, welche über einen eingefügten Fahrzeugschlüssel betätigt werden, spürt der Benutzer nicht am Gegendruck der Schlosseinrichtung, ob er die Tür beispielsweise verschlossen hat, oder nicht. In vielen Fällen zieht der Benutzer deshalb nach einem Verriegeln einer Fahrzeugtür mit einem Keyless-Entry-System erneut am Türgriff, um zu überprüfen, ob die Tür tatsächlich verschlossen ist.

Die Aufgabe der vorliegenden Erfindung besteht darin, Möglichkeiten zur Behebung zumindest eines der oben aufgezählten Nachteile zu finden.

Erfindungsgemäß werden ein Schließsystem und ein Verfahren angegeben, wie sie in den unabhängigen Ansprüchen definiert sind. Die abhängigen Ansprüche definieren vorteilhafte oder bevorzugte Ausführungsformen.

Es kann eine Umfelderfassungseinrichtung zur Erfassung eines Objekts und/oder einer Objektbewegung in mindestens einer Teilumgebung des Fahrzeugs und zur Bereitstellung eines entsprechenden Sensorsignals vorgesehen sein, wobei in Abhängigkeit des Sensorsignals ein Zugang zu einem Innenraum des Fahrzeugs freigebbar ist, und wobei die Umfelderfassungseinrichtung an einer exponierten Komponente des Fahrzeugs anordenbar und mit ihr eine Öffnungsvorrichtung des Fahrzeugs überwachbar ist.

Dabei liegt die Erkenntnis zugrunde, dass die hohen Kosten für die Türgriffe mit den Sensor-Elektroniken für ein Keyless-Entry-System durch den begrenzten Bauraum in dem Türgriffbereich bedingt sind. Sehr vorteilhaft ist deshalb die Anbringung einer Umfetderfassungseinrichtung an einer exponierten Fahrzeugkomponente, wie beispielsweise an einem Außenspiegel, an einer Zierleiste und/oder hinter der Scheibe und/oder im Randbereich der Scheibe und/oder an einem Heckscheibenwischer, bzw. im Heckbereich eines Fahrzeugs. Empfehlenswert ist deshalb eine Implementierung der Umfelderfassungseinrichtung in einen Rückstrahler oder in den Stoßfänger.

Die für die Anbringung der Umfelderfassungseinrichtung vorgeschlagenen Fahrzeugkomponenten lassen sich einfach nachrüsten, beziehungsweise dienen selbst als Sensorkomponenten. So kann beispielsweise bei einer Beschädigung einer Umfelderfassungseinrichtung schnell und kostengünstig eine neue Umfelderfassungseinrichtung am Fahrzeug angebracht werden, da ein aufwendiges Ausbauen der beschädigten Umfelderfassungseinrichtung und ein ebenso aufwendiges Einbauen einer neuen Sensoreinrichtung in diesem Fall entfällt. Auch eine Stromversorgung einer Umfelderfassungseinrichtung ist bei einer Anbringung der Umfelderfassungseinrichtung an einem Außenspiegel, einer Zierleiste oder einem Heckscheibenwischer, bzw. im Heckbereich leicht realisierbar, da in allen aufgezählten Bereichen geeignete Leitungen auf einfache Weise erreichbar sind. Dabei können auch die Türgriffe und Türschlösser aus der aktuellen Fahrzeugserie übernommen werden. Dies spart die Kosten für ein Entwickeln eines neuen Türgriff- oder Türschlosstyps und ermöglicht so ein billigeres Erwerben eines Keyless-Entry-Systems für einen Benutzer.

Ebenso wird ein Verfahren zum Öffnen eines Fahrzeugs angegeben durch Erfassen einer Bewegung einer Person oder eines Objekts vor einer Berührung des Fahrzeugs durch die Person oder das Objekt, Erfassen einer Zugangsberechtigung, ausgelöst durch die erfasste Bewegung und Ausgeben eines Steuerbefehls an ein Schließsystem in Abhängigkeit der erfassten Bewegung und der erfassten Zugangsberechtigung.

Über das Sensorsignal der erfindungsgemäßen Umfelderfassungseinrichtung ist das Schließsystem aktivierbar. Eine Detektion zur Erkennung eines Annäherns einer Person an das Fahrzeug löst dann die Kommunikationsaufnahme des Keyless-Entry-Systems mit dem ID-Geber, beispielsweise über Funk, aus. Die Identifikationsprozedur kann dadurch früher gestartet werden. Das oben angesprochene Problem eines "Verhakens" bei einem Öffnen einer Fahrzeugtür kann somit über eine erfindungsgemäße Umfelderfassungseinrichtung und über das oben vorgestellte Verfahren gelöst werden. Auf diese Weise lässt sich das Ausüben von zu großen Kräften auf den Türgriff durch die Person und das damit verbundene Risiko einer Beschädigung des Türgriffs einfach umgehen.

Das Schließsystem kann so ausgelegt sein, dass das Objekt oder die Objektbewegung über ein elektromagnetisches/optisches Signal (Infrarot) und/oder über ein Ultraschallsignal erfassbar ist. Beispielsweise ist das durch die Umfelderfassungseinrichtung nachgewiesene Objekt eine ID-Geberkomponente. Oder die Umfelderfassungseinrichtung ist zur Erfassung einer Annäherung einer Person an das Fahrzeug ausgelegt. Eine weitere Alternative besteht auch darin, dass die Umfelderfassungseinrichtung in einem abgegrenzten Bereich der Fahrzeugumgebung eine bestimmte Bewegung, beispielsweise eine Handbewegung erfasst und daraufhin ein Signal zur Steuerung einer Freigabe eines Fahrzeuginnenraums ausgibt. Alle die hier aufgezählten Sensortypen lassen sich dabei auf einfache Weise- wie oben erwähnt- an einem Außenspiegel, einer Zierleiste oder einem Heckscheibenwischer anbringen, ohne dass dies für den Fahrer mit unnötig hohen Kosten verbunden wäre.

Als Alternative oder als Ergänzung dazu kann die Umfelderfassungseinrichtung einen Berührungssensor umfassen. Dabei kann der Berührungssensor ein Schalter oder ein Taster sein. Auch dieser Sensortyp ist leicht an einer der oben aufgezählten Fahrzeugkomponenten anbringbar. Der Benutzer gibt in diesem Fall seine Eingabe durch eine Berührung einer Oberfläche des Berührungssensors ein.

Erfindungsgemäß wird ein Schließsystem für ein Fahrzeug angegeben mit einer in das Fahrzeug auf der Fahrerseite integrierten, ersten Übertragungseinrichtung zum Erzeugen eines ersten elektromagnetischen Felds zur Ermittlung einer Zugangsberechtigung und einer in das Fahrzeug auf der Beifahrerseite integrierten, zweiten Übertragungseinrichtung zum Erzeugen eines zweiten elektromagnetischen Felds zur Ermittlung der Zugangsberechtigung, wobei von der ersten Übertragungseinrichtung das erste elektromagnetische Feld mit einem ersten vorgegebenen elektrischen Strom und von der zweiten Übertragungseinrichtung das zweite elektromagnetische Feld mit einem vom ersten abweichenden, zweiten vorgegebenen elektrischen Strom erzeugt wird.

Ferner ist erfindungsgemäß vorgesehen, ein Verfahren zur Ermittlung einer Zugangsberechtigung zu einem Fahrzeug durch Erzeugen eines ersten elektromagnetischen Felds auf der Fahrerseite und Erzeugen eines zweiten elektromagnetischen Felds auf der Beifahrerseite, wobei das erste elektromagnetische Feld mit einem ersten vorgegebenen elektrischen Strom und das zweite elektromagnetische Feld mit einem vom ersten abweichenden, zweiten vorgegebenen elektrischen Strom erzeugt wird.

In vorteilhafter Weise ist somit ein Detektor zum Detektieren der elektromagnetischen Felder bzw. ein Empfänger zum Detektieren der elektromagnetischen Signale in der Lage, seine eigene Position gegenüber dem Fahrzeug zu bestimmen und an ein Steuergerät des Fahrzeugs zu ermitteln. Bei einer alternativen Ausführungsform, bei der ein Empfänger bzw. Detektor auf die ausgesandten Signale bzw. das erzeugte Wechselfeld unmittelbar reagiert, ist das Steuergerät des Kraftfahrzeugs in der Lage, die Position des Senders bzw. Detektors zu ermitteln.

Vorzugsweise ist die Stromstärke des ersten Stroms höher als diejenige des zweiten Stroms. Damit ergeben sich für das erste elektromagnetische Feld und das zweite elektromagnetische Feld unterschiedliche Feldstärken, so dass eindeutig ermittelt werden kann, auf welcher Seite des Fahrzeugs sich der Empfänger bzw. ID-Geber befindet.

Der erste Strom kann aber auch eine andere Frequenz besitzen, als der zweite Strom. Auch damit kann der Empfänger bzw. ID-Geber erkennen, von welcher Übertragungseinrichtung das Signal bzw. Feld stammt.

Eine weitere Variante besteht darin, dass der erste Strom gegenüber einem Referenzsignal eine andere Phase besitzt, als der zweite Strom. Gleichbedeutend damit ist, wenn der erste Strom gegenüber einem Referenzimpuls zeitlich anders versetzt ist, als der zweite Strom. Auch dies entspricht im weitersten Sinne einer Ansteuerung der Übertragungseinrichtung mit unterschiedlichen Strömen, wodurch eine eindeutige Lokalisierung gegenüber den Übertragungseinrichtungen möglich ist.

Das erfindungsgemäße Schließsystem kann ein fahrzeugexternes Zugangselement, insbesondere einen ID-Geber eines Keyless-Entry-Systems, zum Detektieren der von den Übertragungseinrichtungen erzeugten elektromagnetischen Feldern aufweisen, wobei in dem Zugangselement eine Feldstärke ermittelbar oder ein entsprechendes Detektionssignal mit einem Schwellwert vergleichbar ist. Hierbei wird die Feldstärke als relatives Maß zur Bestimmung des Abstands zu den Übertragungseinrichtungen verwendet. Das Feldstärkemaß kann zur weiteren Auswertung an das fahrzeuginterne Steuergerät übertragen oder in dem Zugangselement selbst ausgewertet werden. Entsprechend der einfacheren Variante wird ein Feldstärkemaß nicht direkt gewonnen, sondern es erfolgt lediglich ein Schwellwert- bzw. Größenvergleich der Detektionssignale.

Ferner kann das Schließsystem mindestens eine dritte Übertragungseinrichtung zum Erzeugen eines dritten elektromagnetischen Felds für die Ermittlung der Zugangsberechtigung aufweisen. Speziell kann hierdurch beispielsweise zusätzlich ermittelt werden, ob sich der ID-Geber im Bereich der Heckklappe aufhält, wenn die dritte Übertragungseinrichtung an oder in der Heckklappe angeordnet ist.

Insbesondere kann ein erfindungsgemäßes Schließsystem mit zwei Übertragungseinrichtungen zur Erzeugung von elektrischen Feldern mit einem ersten und einem zweiten Strom eine erfindungsgemäße Umfelderfassungseinrichtung aufweisen. Auf diese Weise kann der ID-Geber genau lokalisiert werden, wobei über ein vorzeitigeres Starten des Identifikationsverfahrens verhindert wird, dass eine zugangsberechtigte Person noch vor einer Lokalisierung des ID-Gebers einen Türgriff betätigt.

Wie bereits angedeutet wurde, kann jedes der hier vorgestellten Schließsysteme in oder an einem Fahrzeug angebracht sein. Bei einem Schließsystem mit zwei Übertragungseinrichtungen kann die erste Übertragungseinrichtung in einer Fahrertür und die zweite Übertragungseinrichtung in einer Beifahrertür oder im jeweiligen Bereich dieser Türen angeordnet sein. Damit ist zumindest gewährleistet, dass die Position des ID-Gebers hinsichtlich der Fahrzeugseite ermittelt werden kann. Auch könnte hierdurch ein seitenselektives Öffnen des Fahrzeugs in Abhängigkeit von der Position des ID-Gebers durchgeführt werden.

In einer bevorzugten Ausgestaltung wird das erste elektromagnetische Feld für ein erstes Zeitintervall und mindestens das zweite elektromagnetische Feld für ein zweites, an das erste anschließende Zeitintervall erzeugt. Damit kann der Empfänger bzw. ID-Geber zunächst auf das erste und dann auf das zweite elektromagnetische Feld reagieren. Die fahrzeuginterne Steuereinrichtung hat dann die Möglichkeit, dieses zeitliche Reaktionsverhalten entsprechend zu interpretieren.

Vorgestellt wird außerdem ein Fahrzeug mit einem Schließsystem umfassend einen Schlossbauraum und/oder eine Schlossabdeckung und eine Umfelderfassungseinrichtung zur Erfassung eines Objekts und/oder einer Objektbewegung in mindestens einer Teilumgebung des Fahrzeugs und zur Bereitstellung eines entsprechenden Sensorsignals, wobei in Abhängigkeit des Sensorsignals ein Zugang zu einem Innenraum des Fahrzeugs freigebbar ist, und wobei die Umfelderfassungseinrichtung in der Schlossabdeckung und/oder in dem Schlossbauraum angeordnet ist.

Bei einem Fahrzeug mit einem hier beschriebenen Schließsystem wird eine Zugangsberechtigung zu einem Fahrzeuginnenraum nicht mittels eines Einfügens eines Schlüssels in ein Schloss ermittelt. Die Schlossabdeckung und der Schlossbauraum dienen damit nicht mehr zur Anbringung oder zum Schutz eines Schlosses und können somit für eine Umfelderfassungseinrichtung genutzt werden. Dabei bieten die Schlossabdeckung und der Schlossbauraum eine kostengünstige Möglichkeit zur Anbringung einer Umfelderfassungseinrichtung an einem Fahrzeug.

Beispielsweise kann die Umfelderfassungseinrichtung einen Berührungssensor umfassen. Vorzugsweise weist der Berührungssensor in diesem Fall eine Entriegelungs-Taste und/oder eine Verriegelungs-Taste zur manuellen Betätigung mindestens einer Schließeinrichtung des Fahrzeugs auf. Die Tasten können so im Bereich der Schlossabdeckung angebracht sein, dass der Fahrer sie auf einfache Weise mit dem Daumen betätigen kann während er einen Türgriff nahe der betätigten Schließeinrichtung hält.

Ein Ausführungsbeispiel der Erfindung beschreibt auch ein Fahrzeug umfassend einen vollständig umschlossenen Hohlraum, wobei eine Abdeckkomponente den Hohlraum von einer Teilumgebung des Fahrzeugs abschließt, und ein Schließsystem mit einer Umfelderfassungseinrichtung zur Erfassung eines Objekts und/oder einer Objektbewegung mindestens in der Teilumgebung des Fahrzeugs über ein von der Umfelderfassungseinrichtung emittiertes und/oder detektiertes Erfassungssignal und zur Bereitstellung eines entsprechenden Sensorsignals, wobei in Abhängigkeit des Sensorsignals ein Zugang zu einem Innenraum des Fahrzeugs freigebbar ist, und wobei die Abdeckkomponente für das Detektionssignal der Umfelderfassungseinrichtung durchdringbar und die Umfelderfassungseinrichtung innerhalb des Hohlraums angeordnet ist.

Insbesondere kann der Hohlraum innerhalb einer Fahrzeugtür, einer Heckklappe und/oder einer Fahrzeugsäule angebracht sein. Dies ist realisierbar, indem zumindest ein Teil einer Fahrzeugtür und/oder einer Hecklappe aus Kunststoff oder einem anderen für die Umfelderfassungseinrichtung "durchsichtigen" Material ausgebildet ist. Die Umfelderfassungseinrichtung ist in diesem Fall beispielsweise hinter einer Außenhülle des Fahrzeugs implementiert. Für eine dazu geeignete Umfelderfassungseinrichtung kann auch das Türblech oder das Heckklappenblech Teil der Abdeckkomponente sein. Ebenso ist es möglich, Aussparungen mit Kunststoff aufzufüllen oder B-Säulen-Verkleidungen, Türverkleidungen und Heckdeckel aus Kunststoff herzustellen und dahinter eine Umfelderfassungseinrichtung anzubringen. Eine weitere Möglichkeit zur Anbringung einer Umfelderfassungseinrichtung zur Schaltung eines Fahrzeugschlosses, beispielsweise am Heckdeckel, ist ein Stoßfänger. Auch Fahrzeuglichtkomponenten können hinter ihrer Glasabdeckung eine entsprechende Umfelderfassungseinrichtung aufweisen. Auf diese Weise lässt sich zum Beispiel in einem Rückstrahler eine Umfelderfassungseinrichtung anbringen, über deren Sensorsignal das Heckdeckelschloss verschlossen oder entriegelt wird. Auf diese Weise ist es möglich, auf das Anbringen von Tastern am Fahrzeugheck zum Öffnen oder Schließen des Heckdeckelschlosses zu verzichten.

Ebenso vorgestellt ist ein Fahrzeug mit einem Schließsystem umfassend eine Umfelderfassungseinrichtung zur Erfassung eines Objekts und/oder einer Objektbewegung in mindestens einer Teilumgebung des Fahrzeugs und zur Bereitstellung eines entsprechenden Sensorsignals, wobei in Abhängigkeit des Sensorsignals ein Zugang zu einem Innenraum des Fahrzeugs freigebbar ist, und wobei in Abhängigkeit des Sensorsignals ein akustisches Signal aktivierbar ist.

Auf diese Weise erhält ein Benutzer beispielsweise eine akustische Rückkopplung darüber, dass seine Anwesenheit in einer näheren Umgebung des Fahrzeugs von der Umfelderfassungseinrichtung detektiert wurde. Einem Ausbleiben der akustischen Rückkopplung kann der Benutzer entnehmen, dass die Umfelderfassungseinrichtung des Schließsystems seines Fahrzeugs nicht mehr funktionsfähig ist.

Vorzugsweise kann bei Erfassung eines Objekts mit einem ID-Geber ein erstes akustisches Signal und bei Erfassung eines Objekts ohne den ID-Geber ein zweites akustisches Signal aktivierbar sein. Insbesondere bei einer ungültigen Annäherung kann das Fahrzeug durch akustische Signale in diesem Fall den unberechtigten Näherungsversuch melden. Dies kann zur Abschreckung eines Einbruchversuchs oder als Spielschutz am Fahrzeug dienen. Bei einer gültigen Auslösung einer Komfort-Schließfunktion, insbesondere über die Keyless-Bedienstelle oder über die Funkfernbedienung, wird während der Ausführung der Komfort-Schließfunktion ein akustisches Signal vom Fahrzeug abgegeben. Dies kann beispielsweise ein Piepsen oder Summen in Intervallen von einer Sekunde sein. Optimalerweise befindet sich eine Tonausgabeeinrichtung für das akustische Signal dabei direkt oder nahe an dem betätigten Türgriff oder Taster. Zusätzlich zu dem akustischen Signal kann dabei auch ein optisches Signal aktiviert werden.

Des Weiteren kann ein Fahrzeug auch mit einem erfindungsgemäßen Schließsystem ausgestattet sein, welches sowohl über eine in den oberen Abschnitten beschriebene akustische Rückkopplung, als auch über einen weiteren der oben genannten Vorteile verfügt.

Des Weiteren wird in der vorliegenden Erfindung eine Fahrzeug-Lichtkomponente mit einer Drucksensoreinrichtung zur Erfassung einer Druckausübung auf die Fahrzeug-Lichtkomponente und zur Bereitstellung eines entsprechenden Steuersignals vorgestellt, wobei in Abhängigkeit des Steuersignals ein Zugang zu einem Innenraum des Fahrzeugs freigebbar ist.

Die Fahrzeug-Lichtkomponente kann dabei beispielsweise ein Rückstrahler sein, den ein Benutzer zum Schließen oder zum Entriegeln des Heckdeckels drückt. Auf diese Weise ist es möglich, auf das Anbringen von Tastern, welche herkömmlicherweise zur Eingabe eines Öffnungs- oder Schließbefehls an die Heckdeckelschließeinrichtung dienen, zu verzichten.

Es wird auch auch eine Fahrzeugtür vorgestellt mit einer Anzeigeeinrichtung zur Anzeige einer ersten Information über eine erste Fahrzeugeinrichtung, wobei die Anzeigeeinrichtung in einer Türbrüstung der Fahrzeugtür angeordnet ist, und wobei über die Anzeigeeinrichtung eine zweite Information über eine zweite Fahrzeugeinrichtung anzeigbar ist.

Dies ermöglicht ein einfaches Informieren des Fahrers über einen Fahrzeugstatus während einer Betätigung zum Öffnen oder Verschließen des Fahrzeugs. Der Fahrer erfährt dabei beispielsweise, ob das Fahrzeug wunschgemäß verriegelt ist, oder nicht. Besonders vorteilhaft ist es dazu, wenn die Anzeigeeinrichtung an der Fahrertür angebracht ist. Die derzeitig verwendete LED zur Zustandsanzeige lässt sich dabei in die hier beschriebene Anzeigeeinrichtung integrieren.

Dabei kann die erste Fahrzeugeinrichtung oder die zweite Fahrzeugeinrichtung ein Fahrzeugfenster, ein Schiebedach, ein Heckdeckel, ein Benzintank oder ein ID-Geber sein. Die dem Fahrer übermittelte Information betrifft beispielsweise ein offen gelassenes Fenster oder einen im Fahrzeug vergessenen ID-Geber. Auf diese Weise kann ein möglicher Diebstahl des Fahrzeugs verhindert werden.

Die Anzeigeinrichtung kann dabei einen Benutzer über mindestens ein Symbol und/oder über mindestens ein α-numerisches Zeichen bezüglich des Fahrzeugstatus informieren. Dies ist beispielsweise dadurch möglich, dass die Anzeigeeinrichtung ein Display umfasst.

Weiter wird eine Betätigungsvorrichtung zum Öffnen und/oder Schließen eines Fahrzeuginnenraums mit einer Leuchtkomponente zur Leuchtmarkierung von mindestens einem Teil der Betätigungsvorrichtung angegeben, wobei über die Leucht-komponente eine Information über einen Zustand und/oder eine Bedienung einer Fahrzeugkomponente anzeigbar ist.

Auf diese Weise kann ein Fahrer beispielsweise darüber informiert werden, ob eine Fahrzeugtür auf seine Eingabe hin abgeschlossen wurde, oder nicht. Nach dem bisherigen Stand der Technik ist dies nicht immer verlässlich möglich. So können Schlossgeräusche von einem Fahrer an einer vielbefahrenen Straße durch den Verkehrslärm leicht überhört werden. Die Blinkquittung der Blinker wird von dem Fahrer bei Tageslicht oft nicht wahrgenommen, da der Abstand zwischen der Position des Fahrers und den Blinkern zu groß ist. Hingegen kann der Fahrer, aufgrund der Tatsache, dass er beim Öffnen oder Schließen eines Fahrzeuginnenraums mit einer Hand im nahen Kontakt zu Teilen der dazugehörigen Betätigungsvorrichtung steht, ein Leucht- oder Blinksignal einer erfindungsgemäßen Betätigungsvorrichtung selbst bei starker Sonneneinstrahlung noch wahrnehmen.

Die Fahrzeugkomponente, über welche eine Information anzeigbar ist, kann dabei eine Schließeinrichtung des Fahrzeuginnenraums sein. Die Betätigungsvorrichtung kann einen Türgriff, einen Taster, einen Sensor, eine Verriegelungsfläche und/oder eine Entriegelungsfläche umfassen. Dem Fahrer wird dann beispielsweise über eine Türgriff-Innenflächenbeleuchtung und/oder über eine Griffmuldenbeleuchtung eine fahrzeugspezifische Nachricht übermittelt. Auch eine Erfassung eines Objekts und/oder einer Objektbewegung durch eine Umfelderfassungseinrichtung kann dem Fahrer auf diese Weise mitgeteilt werden. Dabei besteht die Möglichkeit einer unterschiedlichen Signalisierung bei einer gültigen Annäherung, wenn der ID-Geber im entsprechenden Erfassungsbereich an einem Objekt identifiziert wurde, und bei einer ungültigen Näherung durch unterschiedliche Farben und/oder Blinkfrequenzen der Beleuchtungen.

Eine Lösung der oben genannten Aufgabe verwendet eine Heckleuchtenvorrichtung oder eine Nummernschildbeleuchtungsvorrichtung für ein Fahrzeug, wobei über eine Heckleuchte oder über eine Nummernschildbeleuchtung eine Information über eine Freigabe eines Innenraums des Fahrzeugs anzeigbar ist.

Eine Heckleuchtenvorrichtung oder eine Nummemschildbeleuchtungsvorrichtung eignet sich besonders gut, um einen Benutzer über den Status oder über eine Betätigung des Heckdeckelschlosses zu informieren. Aufgrund der Tatsache, dass der Fahrer beim Öffnen oder Verschließen des Heckdeckels meistens am Fahrzeugheck steht, kann er ein Leucht- oder Blinksignal von einer Heckleuchte oder einer Nummernschildbeleuchtung leicht erkennen. Auch das am Fahrzeugheck angebrachte Emblem oder eine Griffmulde zum Öffnen der Heckklappe können über eine entsprechende Beleuchtungseinrichtung verfügen. Bei einer Erfassung eines Objekts und/oder einer Objektbewegung durch eine Umfelderfassungseinrichtung können diese aktivierbar sein. Bei einer erfassten gültigen Annäherung eines Benutzers mit einem ID-Geber kann dabei ein anderes Leuchtsignal aktivierbar sein, als bei einer erfassten ungültigen Annäherung einer Person ohne einen ID-Geber.

Vorgestellt ist auch ein Fahrzeugfunkschlüssel zum Öffnen und/oder Schließen eines Innenraums eines Fahrzeugs umfassend eine Taste zur manuellen Betätigung durch einen Benutzer und eine elektrische Anzeigeeinrichtung zur Anzeige einer Zustandsinformation, wobei die elektrische Anzeigeeinrichtung in die Taste integriert ist.

Durch das Einfügen der Anzeigeeinrichtung in die Taste kann eine Fläche des Funkschlüssels sowohl für die Taste als auch für die Anzeigeeinrichtung genutzt werden. Die Taste erhält dabei eine Doppelfunktion, wodurch eine intuitive Bedienung ermöglicht und Bauraum am Funkschlüssel gespart wird. Dies ermöglicht eine geringere Gesamtfläche des Funkschlüssels bei gleichzeitiger Anbringung von mindestens einer Taste und mindestens einer Anzeigeeinrichtung.

Die Anzeigeeinrichtung kann dabei ein Display sein. Möglich ist aber auch, dass die Anzeigeeinrichtung ein Leuchtelement, beispielsweise eine LED, aufweist. Die Anzeigeeinrichtung ist über ein Steuersignal aktivierbar und unterscheidet sich damit von einer Beschriftung einer Taste.

Ein weiteres erfindungsgemäßes Verfahren zur Lösung eines der oben aufgezählten Probleme eines herkömmlichen Keyless-Entry-Systems ist ein Verfahren zum Verschließen eines Fahrzeugs durch Feststellen einer Zugangsberechtigung, Erfassen einer Bewegung einer Person und Ausgeben eines Schließsteuerbefehls in Abhängigkeit der erfassten Bewegung der Person und der festgestellten Zugangsberechtigung.

Dies ermöglicht ein Verriegeln des Fahrzeugs, ohne dass ein Fahrer dazu einen der Türgriffe betätigen muss. Des Weiteren entfallen über dieses Verfahren die Kosten für eine aufwendige Elektronik zur Erkennung eines Verriegelungswunsches einer zugangsberechtigten Person an einem Türgriff.

Erfindungsgemäß umfasst das Verfahren zum Verschließen eines Fahrzeugs ein oben vorgestelltes Verfahren zur Ermittlung einer Zugangsberechtigung beinhalten. Damit ist gewährleistet, dass eine Fahrzeugverriegelung nur von einem Inhaber der Zugangsberechtigung ausgeführt werden kann. Gleichzeitig kann dadurch ein "sich Ausschließen" einer Person verhindert werden, da das Fahrzeug nur verriegelbar ist, wenn der ID-Geber sich außerhalb des Fahrzeugs befindet.

Die vorliegende Erfindung wird nun anhand der Zeichnungen näher erläutert, in denen zeigen:
- Figur 1: eine Skizze über die Ausbreitung elektromagnetischer Felder einer erfindungsgemäßen Schließeinrichtung;
- Figur 2: ein Ablaufdiagramm zur Ermittlung einer Zugangsberechtigung;
- Figur 3: eine Skizze zur Anbringung einer erfindungsgemäßen Schließvorrichtung;
- Figur 4: einen Funkschlüssel; und
- Figur 5: ein Display in einer Fahrzeugtürbrüstung.

Die nachfolgend näher geschilderten Ausführungsbeispiele stellen bevorzugte Ausführungsformen der vorliegenden Erfindung dar.

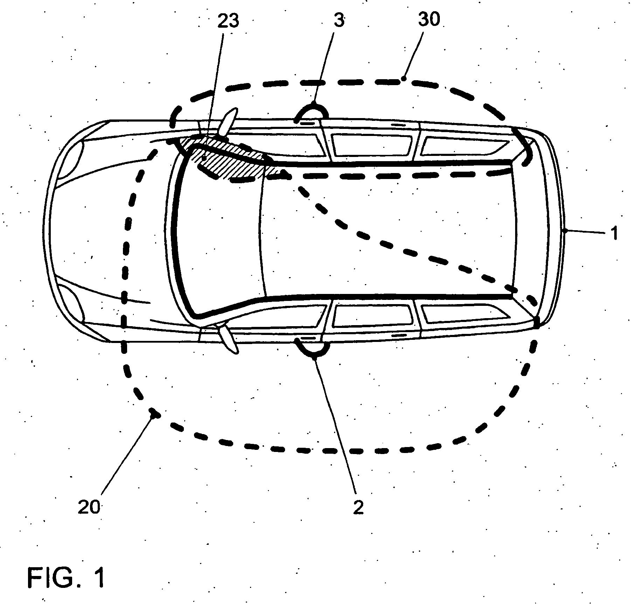

In Figur 1 ist ein Fahrzeug 1 mit einem Keyless-Entry-System schematisch angedeutet. In der Fahrertür befindet sich eine an sich nicht sichtbare Antenne 2, die zum Aussenden eines elektromagnetischen Signals bzw. eines elektromagnetischen Felds für das Keyless-Entry-System dient. In Figur 1 ist die Antenne 2 symbolisch durch einen Bogen angedeutet. Die Antenne wird beispielsweise mit einem Wechselstrom der Frequenz 125 kHz mit einer vorgegebenen ersten Stromstärke angesteuert. Hierdurch wird ein elektromagnetisches Wechselfeld erzeugt, das beispielsweise in dem in Figur 1 angedeuteten Bereich 20 für das Keyless-Entry-System nutzbar ist.

In der Beifahrertür befindet sich ebenfalls eine Antenne 3, die jedoch mit einer etwas geringeren, zweiten Stromstärke angesteuert wird, so dass das damit nutzbare elektromagnetische Feld einen etwas geringeren Ausbreitungsbereich 30 um die Antenne 3 verglichen mit dem Ausbreitungsbereich 20 um die Antenne 2 besitzt.

In Figur 1 ist dies angedeutet, indem der Scan- bzw. Ausbreitungsbereicht 20 um die Antenne 2 in der Fahrertür deutlich größer als der Bereich 30 um die Antenne 3 in der Beifahrertür eingezeichnet ist. Insbesondere deckt der Scanbereich 20 auch den Innenraum des Fahrzeugs im Bereich des Fahrers und Beifahrers ab und reicht bis zur A-Säule auf der Beifahrerseite. In diesen Bereich der A-Säule auf der Beifahrerseite überlappen sich die Scanbereiche 20 und 30 in einem Überlappungsgebiet 23. Dieses Überlappungsgebiet 23 wird bei der Auswertung beispielsweise dem Scanbereich 30 auf der Beifahrerseite zugeordnet.

In dem vorliegenden Beispiel wurde darauf verzichtet, das Keyless-Entry-System auch auf den Heckklappenbereich auszudehnen. Dennoch ist dies ohne weiteres möglich. Die Auswertung ist dann entsprechend vielfältig zu gestallten.

Nachfolgend wird die Funktionsweise des erfindungsgemäßen Keyless-Entry-Systems an einem Beispiel näher erläutert. Befindet sich eine zugangsberechtigte Person mit einem ID-Geber in der Nähe der A-Säule auf der Beifahrerseite, so wird dieser ID-Geber (hier auch als Zugangselement bezeichnet) sowohl von dem Feld um die Antenne 3 auf der Beifahrerseite als auch von dem Feld um die Antenne 2 auf der Fahrerseite aktiviert. Das System kann also zunächst nicht unterscheiden, auf welcher Seite des Fahrzeugs sich der ID-Geber befindet.

Nun wird die Antenne 3 im Türgriff der Beifahrerseite mit einer zweiten Stromstärke angesteuert, die unter der ersten Stromstärke zur Ansteuerung der Antenne 2 auf der Fahrerseite liegt. Daher reicht das Feld der Beifahrerseitenantenne gemäß dem Beispiel von Figur 1 nur bis zur A-Säule der Beifahrerseite, aber nicht bis zur Fahrerseite. Somit kann erkannt werden, dass sich der ID-Geber hier auf der Beifahrerseite befindet. In diesem Fall wird er nämlich sowohl durch die Antenne 2 auf der Fahrerseite, als auch durch die schwächer bestromte Antenne 3 auf der Beifahrerseite angesteuert. Auf der Fahrerseite würde er nur vom Feld der Antenne 2 erfasst werden. In Abhängigkeit von der Ansteuerung mit einem oder mehreren Feldern reagiert der ID-Geber mit einem entsprechenden Signal an die Steuerelektronik des Kraftfahrzeugs, so dass die Zentralverriegelung in gewünschter Weise spezifisch für die Position des ID-Geber ausgelöst werden kann.

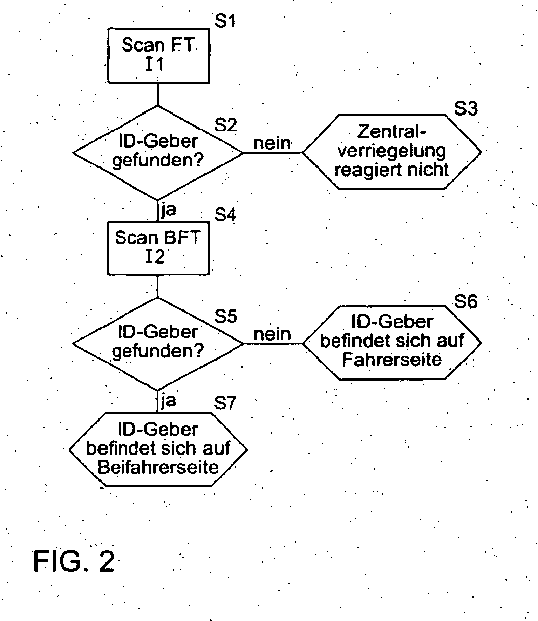

Nachfolgend wird der Ablauf der Ermittlung einer Zugangsberechtigung mit dem oben genannten System im Detail anhand von Figur 2 dargestellt. Demnach wird gemäß Schritt S1 zunächst ein Scan an der Fahrertür mit einem ersten Strom I1 in den Bereich 20 (vgl. Figur 1) durchgeführt. Anschließend erfolgt eine Abfrage gemäß Schritt S2, ob ein ID-Geber gefunden worden ist. Falls kein ID-Geber in dem Bereich 20 gefunden wurde, reagiert die Zentralverriegelung gemäß Schritt S3 nicht.

Wurde hingegen ein ID-Geber im Bereich 20 detektiert, so erfolgt zur genaueren Positionsbestimmung ein Scan an der Beifahrertür mit einem zweiten Strom 12 im Bereich 30 gemäß Schritt S4. Wiederum erfolgt anschließend entsprechend Schritt S5 eine Abfrage, ob der ID-Geber auch im Bereich 30 detektiert wurde. Falls er dort nicht detektiert wurde, befindet er sich gemäß der Feststellung S6 auf der Fahrerseite. Wurde der ID-Geber auch mit dem zweiten Scan detektiert, so wird entsprechend Schritt S7 eindeutig festgestellt, dass er sich auf der Beifahrerseite befindet.

Wenn zusätzlich ein Scan beispielsweise an der Heckklappe vorgesehen ist, so kann dieser im Anschluss an Schritt S5 erfolgen und eine entsprechende Auswertung sich daran anschließen Sinngemäß können weitere Scans durchgeführt werden.

Im vorliegenden Beispiel wurden die Scans zur Aktivierung im jeweiligen Scanbereich befindlicher ID-Geber mit unterschiedlichen Strömen 11, 12 durchgeführt. Dabei bedeutet dies primär, dass unterschiedliche Stromstärken eingesetzt werden. Die Scans können aber auch mit unterschiedlichen Frequenzen oder Phasen durchgeführt werden. In diesem Fall registriert der ID-Geber bzw. "Schlüssel" die Frequenz oder Phase des elektromagnetischen Signals, womit er eindeutig feststellen kann, ob das Signal bzw. Feld von der Fahrertür, von der Beifahrertür oder aber auch von der Heckklappe stammt. Daraufhin kann der ID-Geber ein entsprechendes Signal an die Steuereinrichtung des Kraftfahrzeugs senden.

In einem ID-Geber werden typischerweise die Feldstärken der elektromagnetischen Signale ermittelt. Für die Auswertung können ein oder mehrere Schwellwerte in dem ID-Geber fest vorgegeben sein. Alternativ kann ein Schwellwert auch erst nach einem ersten Scan dynamisch gesetzt werden, wenn feststeht, wie hoch die Feldstärke dieses ersten Scans war. Dadurch lässt sich die Ortsauflösung in Teilbereichen um das Kraftfahrzeug verbessern.

Für ein Fahrzeug können mehrere ID-Geber vorgesehen sein, diese lassen sich gegebenenfalls mit unterschiedlichen Feldstärken, die von den Antennen bzw. Übertragungseinrichtungen abgeben werden, aktivieren. Auch dies lässt sich mit geeigneter logischer Auswertung mit dem erfindungsgemäßen Prinzip, im Bereich der Fahrzeugschlösser Felder mit unterschiedlichen Strömen zu erzeugen, kombinieren.

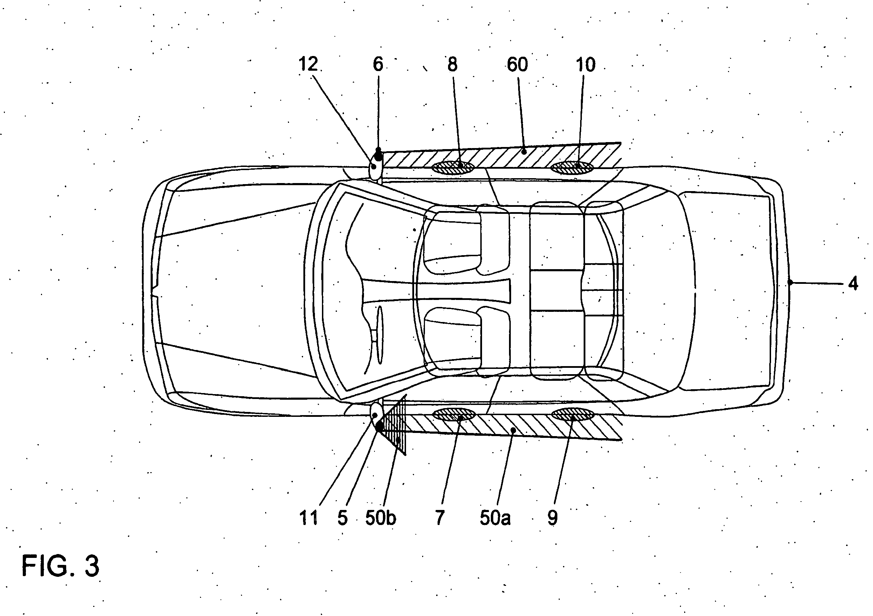

Das Fahrzeug 4 in Figur 3 weist ein anderes erfindungsgemäßes Schließsystem auf. Dieses Schließsystem umfasst zwei Umfelderfassungssensoren 5 und 6, sowie vier Berührungssensoren 7 bis 10.

Je einer der beiden Umfelderfassungssensoren 5 und 6 ist an einem der beiden Außenspiegel 11 und 12 angebracht. Der Umfelderfassungssensor 5 befindet sich am Außenspiegel 11 auf der Fahrerseite und der Umfelderfassungssensor 6 befindet sich am Außenspiegel 12 auf der Beifahrerseite. Die vier Berührungssensoren 7 bis 10 sind an jeweils einem Türgriff der vier Türen des Fahrzeugs 4 befestigt.

Der Umfelderfassungssensor 5 besteht aus einer ersten Übertragungseinrichtung, einem ersten Näherungssensor und einem Bewegungssensor. Die erste Übertragungseinrichtung gleicht in ihrer Funktionsweise der ersten Übertragungseinrichtung 2 aus Figur 1. Dabei erzeugt die erste Übertragungseinrichtung des Umfelderfassungssensors 5 ein elektromagnetisches Feld, welches sich in seiner Ausdehnung mit dem ersten elektromagnetischen Feld 20 aus Figur 1 deckt. Befindet sich ein dem Schließsystem zugehöriger ID-Geber innerhalb des elektromagnetischen Felds der ersten Übertragungseinrichtung, so wird dieser zur Aussendung eines Signals angeregt. Über dieses Signal lässt sich der ID-Geber nachweisen.

Der erste Näherungssensor ist beispielsweise ein Ultraschallsensor und kann das Annähern einer Person an die Fahrerseite des Fahrzeugs 4 erfassen. Befindet sich eine Person innerhalb des Detektionsbereichs 50a des ersten Näherungssensors, so gibt der erste Näherungssensor ein entsprechendes Startsignal aus. Der Bewegungssensor ist in diesem Bespiel ein Infrarotsensor. Er dient dazu, die Bewegung einer Person innerhalb des Detektionsbereichs 50b nahe am Außenspiegel 11 zu detektieren. In Abhängigkeit der detektierten Bewegung stellt der Bewegungssensor ein Schließbefehlsignal bereit.

Der Umfelderfassungssensor 6 weist eine zweite Übertragungseinrichtung und einen zweiten Näherungssensor auf. Dabei entspricht die zweite Übertragungseinrichtung des Umfelderfassungssensors 6 der zweiten Übertragungseinrichtung 3 des Fahrzeugs 1 aus Figur 1. Der besseren Übersichtlichkeit wegen ist das elektromagnetischen Feld der zweiten Übertragungseinrichtung des Umfelderfassungssensors 6 in Figur 1 nicht eingezeichnet. Zusammen mit der ersten Übertragungseinrichtung lässt sich über die zweite Übertragungseinrichtung die Position des ID-Gebers bestimmen, wie es in den Beispielen aus Figur 1 und 2 beschrieben wurde.

Der zweite Näherungssensor gleicht dem ersten Näherungssensor des Umfeldererfassungssensors 5 und ist in der Lage, über ein Ultraschallsignal das Annähern einer Person an eine der beiden Fahrzeugtüren an der Beifahrerseite des Fahrzeugs 4 zu erfassen. Befindet sich eine Person innerhalb des Detektionsbereichs 60 des zweiten Näherungssensors des Umfelderfassungssensors 6, so gibt der zweite Näherungssensor ebenfalls das Startsignal aus.

Im Folgenden wird die zueinander abgestimmte Funktionsweise der Umfelderfassungssensoren 5 und 6 und der Berührungssensoren 7 bis 10 beschrieben.

Wird das Annähern einer Person an eine der vier Fahrzeugtüren des Fahrzeugs 4 von dem ersten oder dem zweiten Näherungssensor der beiden Umfelderfassungssensoren 5 und 6 detektiert, so erfolgt eine Aktivierung der ersten und der zweiten Übertragungseinrichtung über das ausgegebene Startsignal. Im Gegensatz zu dem ersten und dem zweiten Näherungssensor, welche im verschlossenen Zustand des Fahrzeugs 4 fortlaufend aktiviert sind, befinden sich die erste und die zweite Übertragungseinrichtung ohne eine Bereitstellung des Startsignals in ihrer inaktiven Phase. Da die erste und die zweite Übertragungseinrichtung zur Erzeugung der elektromagnetischen Felder mehr Energie benötigen, als der erste und der zweite Näherungssensor zur Erzeugung ihrer Ultraschallsignale, kann auf diese Weise Energie gespart werden.

Mit der Ausgabe des Startsignals wird das Verfahren zur Ermittlung einer Zugangsberechtigung so durchgeführt, wie es in Figur 2 skizziert ist. Auf eine nochmalige Beschreibung des Ablaufs wird deshalb hier verzichtet.

Die Detektionsbereiche 50a und 60 sind so gewählt, dass eine sich dem Fahrzeug 4 nähernde Person noch vor einer Berührung einer der Fahrzeugtüren des Fahrzeugs 4 von dem ersten oder dem zweiten Näherungssensor erfasst wird. Damit ist gewährleistet, dass das Verfahren zur Ermittlung einer Zugangsberechtigung schon gestartet ist, bevor die Person einen der Berührungssensoren 7 bis 10 an den Fahrzeugtüren berührt.

Wird über das erfindungsgemäße Verfahren eine Zugangsberechtigung für eine Person festgestellt, so gibt das Schließsystem ein Aktivierungssignal an die Berührungssensoren 7 und 9. oder 8 und 10, aus, auf deren Fahrzeugseite ein dem Schließsystem zugehöriger ID-Geber ermittelt wird. Bei einer Lokalisierung des ID-Gebers beispielsweise auf der Fahrerseite werden die Berührungssensoren 7 und 9 aktiviert. Wird der ID-Geber hingegen auf der Beifahrerseite nachgewiesen, so erfolgt der Aktivierungsbefehl an die Berührungssensoren 8 und 10. Die Aktivierung der Berührungssensoren 7 und 9, oder 8 und 10, erfolgt nur solange der ID-Geber noch von mindestens einer der beiden Übertragungseinrichtungen nachgewiesen wird. Entfernt sich die Person mit dem ID-Geber wieder aus den elektromagnetischen Feldern der ersten und der zweiten Übertragungseinrichtung, so werden die aktivierten Berührungssensoren 7 und 9 oder 8 und 10 sofort wieder deaktiviert.

Ist das Schließsystem so ausgelegt, dass es nicht nur die Fahrzeugseite, auf welcher sich der ID-Geber befindet, sondern auch die genaue Position des ID-Gebers erfasst, so wird nur der Berührungssensor 7,8,9 oder 10 aktiviert, welcher an einer Fahrzeugtür angebracht ist, die der aktuellen Position des ID-Gebers am nächsten liegt. Auf diese Weise kann noch besser verhindert werden, dass sich eine nicht zutrittsberechtigte Person Zugang zum Fahrzeuginneren verschafft.

Die Berührungssensoren 7 bis 10 sind beispielsweise Hall-Sensoren und in ihrer aktivierten Phase zur Erfassung einer Druckberührung, beziehungsweise einer Zugberührung, ausgelegt. Wird ein vorgebbarer Druck oder ein vorgebbarer Zug an einem der vier Türgriffe am Fahrzeug 4 von einem aktivierten Berührungssensor 7,8,9 oder 10 erfasst, so wird ein Steuersignal an die zugehörige Fahrzeugtür ausgegeben. Die Fahrzeugtür öffnet sich dann automatisch, ohne dass noch eine weitere Öffnungsvorrichtung betätigt werden muss.

Über die Berührungssensoren 7 bis 10 wird sichergestellt, dass eine Fahrzeugtür sich nur öffnet, wenn dies vom Zutrittsberechtigten auch gewünscht wird. Erfolgt hingegen nach einem Nachweis eines ID-Gebers keine Berührung an einem der Berührungssensoren 7 bis 10, so bleiben die Türen des Fahrzeugs 4 weiterhin verschlossen.

Über das in Figur 3 vorgestellte Schließsystem lässt sich das Fahrzeug 4 auch verschließen, ohne dass eine zugangsberechtigte Person einen Schlüssel dazu benötigt. Bei diesem Verriegelungsverfahren führt die Person eine Bewegung, beispielsweise mit einer Hand, innerhalb des Detektionsbereichs 50b nahe vor dem Umfelderfassungssensor 5 am Außenspiegel 11 aus. Der Bewegungssensor des Umfelderfassungssensors 5 erfasst die Handbewegung im Detektionsbereich 50b und gibt daraufhin das Schließbefehlsignal aus. Über das Schließbefehlsignal werden die erste und die zweite Übertragungseinrichtung zum Nachweis eines ID-Gebers aktiviert. Wird der ID-Geber nahe an dem Außenspiegel 11 detektiert, so gibt das Schließsystem ein Steuersignal zum Verriegeln aller vier Fahrzeugtüren des Fahrzeugs 4 aus. Kann der ID-Geber hingegen nicht nahe am Außenspiegel 11 durch die beiden Übertragungseinrichtungen nachgewiesen werden, so bleibt das Fahrzeug 4 weiterhin unverschlossen. Auf diese Weise ist gewährleistet, dass nur eine zugangsberechtigte Person das Fahrzeug 4 verschließen kann. Ebenso wird durch dieses Verriegelungsverfahren verhindert, dass das Fahrzeug 4 verschlossen wird, obwohl der ID-Geber sich noch innerhalb des Fahrzeugs 4 befindet. Damit kann ein "sich Ausschließen" des Fahrers verhindert werden.

Als Alternative zu den in Figur 3 vorgestellten Näherungssensoren der Umfelderfassungssensoren 5 und 6 ist es auch möglich, weitere Berührungssensoren an den Außenspiegeln 11 und 12 anzubringen. Das Verfahren zur Ermittlung einer Zugangsberechtigung wird in diesem Falle aktiviert, indem eine Person einen dieser Berührungssensoren am Außenspiegel 11 oder 12 berührt. Als weitere Ergänzung ist es möglich, den Umfelderfassungssensor 6 auch mit einem Bewegungssensor auszustatten. Das Fahrzeug 4 lässt sich in diesem Fall auch auf der Beifahrerseite durch eine Handbewegung vor dem Außenspiegel 12 verschließen.

Ebenso kann für den ersten Näherungssensor, den zweiten Näherungssensor und den mindestens einen Bewegungssensor ein anderer Sensortyp gewählt werden. Beispielsweise kann ein Bewegungssensor auch ein Radar- oder ein Ultraschallsensor sein. Für einen Näherungssensor kann auch ein Infrarot- oder ein Radarsensor gewählt werden.

In dem Beispiel aus Figur 3 sind an den Außenspiegeln 11 und 12 je ein Näherungssensor und je eine Übertragungseinrichtung angeordnet. Es ist über die vorliegende Erfindung aber auch möglich, nur die beiden Übertragungseinrichtung an je einen der beiden Außenspiegel 11 und 12 anzubringen und die beiden Näherungssensoren an je einer Zierleiste an der Fahrertür und der Beifahrertür zu befestigen, oder umgekehrt.

Des Weiteren kann auch die Heckklappe über ein erfindungsgemäßes Schließsystem geöffnet oder verschlossen werden. Dazu kann auch am Heckscheibenwischer ein Umfeldererfassungssensor mit einer dritten Übertragungseinrichtung, einem dritten Näherungssensor und einem weiteren Bewegungssensor angebracht werden.

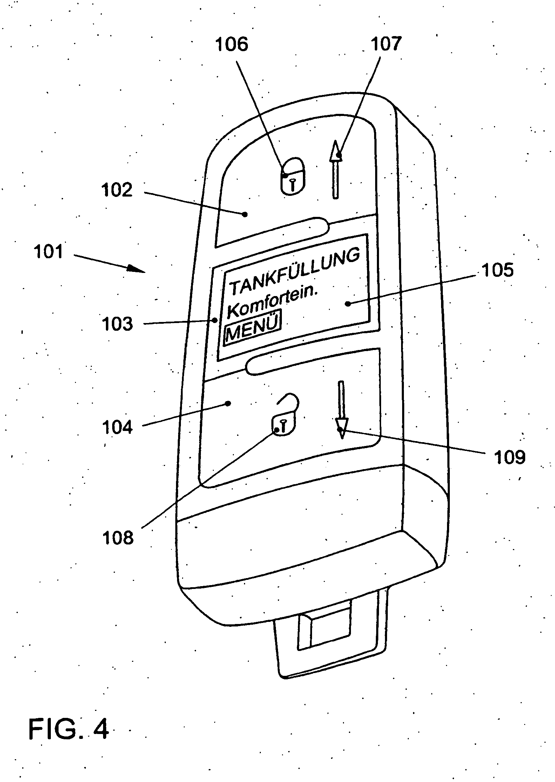

In Figur 4 ist ein intelligenter Funkschlüssel 101 dargestellt. Der intelligente Funkschlüssel 101 weist drei Tasten 102 bis 104 auf. Abhängig von einer manuellen Eingabe eines Fahrers auf den Tasten 102 bis 104 lässt sich eine dem intelligenten Funkschlüssel 101 zugehörige Schlosseinrichtung eines Fahrzeugs steuern. Wird die Taste 102 gedrückt, so wird die Schlosseinrichtung auf "ZU" geschaltet. Ein Drücken der Taste 104 hingegen entriegelt die Schlosseinrichtung.

In die mittlere Taste 103 ist ein LC-Display 105 eingefügt. Über dieses LC-Display 105 kann der Fahrer eine Information ablesen. Vorzugsweise wird auf dem LC-Display 105 nach einem Drücken der Tasten 102 und 104 angezeigt, ob das Fahrzeug verschlossen oder aufgeschlossen ist. Dabei kann beispielsweise für jede der vier Fahrzeugtüren und für die Heckklappe der jeweilige Schließzustand angezeigt werden. Zusätzlich kann das LC-Display 105 auch als Wamanzeige dienen. Ist, wie in dem Beispiel aus Figur 4 gezeigt, der Benzintank nur noch geringfügig gefüllt, so wird dies dem Fahrer über ein Bildsymbol oder über mindestens eine Wortanzeige mitgeteilt.

Über das LC-Display 105 ist des Weiteren eine Menüfunktion anzeigbar, welche über die Taste 103 aktiviert wird. Ist die Menüfunktion aktiviert, so dienen die Tasten 102 und 104 zum Eingeben eines zugehörigen Scrollbefehls. Der Fahrer kann in diesem Fall über die Tasten 102 und 104 einen Menüpunkt auf dem LC-Display 105 auswählen und diesen anschließend über ein Drücken der Taste 103 aktivieren. Der intelligente Funkschlüssel 101 erfüllt in diesem Fall die Funktionen eines Minicomputers.

In dem Beispiel aus Figur 4 weisen auch die Tasten 102 und 104 Leuchtmarkierungen 106 bis 109 auf. Diese Leuchtmarkierungen 106 bis 109 leuchten auf, sobald ein Drücken der Tasten 102 oder 104 von einer Sensoreinrichtung des intelligenten Funkschlüssels 101 erfasst wird. Des Weiteren erfährt der Fahrer über ein Aufleuchten einer der Leuchtmarkierungen 106 bis 109, ob er mit einem Drücken einer der Tasten 102 oder 104 eine Eingabe an ein Fahrzeugschließsystem oder einen Scrollbefehl ausgeführt hat. Als Alternative zu dem Beispiel aus Figur 4 ist es auch möglich, den intelligenten Funkschlüssel 101 so auszustatten, dass jede der drei Tasten 102 bis 104 über ein eingebautes LC-Display 105 verfügt.

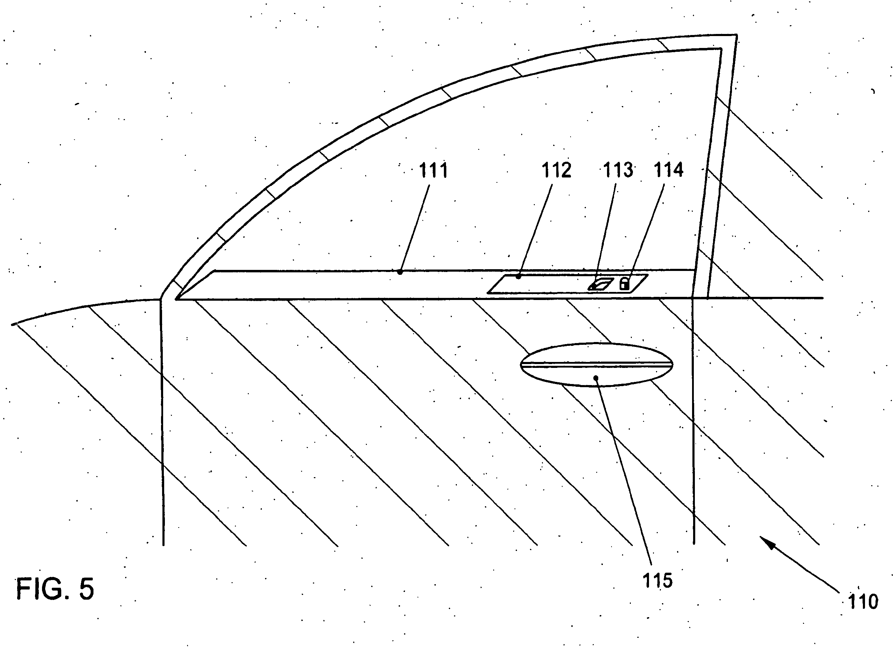

Die in Figur 5 skizzierte Fahrzeugtür 110 weist in der Türbrüstung 111 ein Display 112 auf. Auf diesem Display 112 können mehrere Symbole 113 und 114 so angezeigt werden, dass sie für eine nahe vor der Fahrzeugtür 110 stehende und den Türgriff 115 betätigende Person ablesbar sind. Durch die liegende Anbringung des Displays 112 in der Türbrüstung 111 kann allerdings verhindert werden, dass eine von der Fahrzeugtür 110 entfernt stehende Person die Symbole 113 und 114 erkennt.

Die Symbole 113 und 114 auf dem Display 112 können Bildsymbole, α-numerische Zeichen und/oder Wörter sein. Möglich ist auch, dass auf dem Display 112 Sätze erscheinen, um den Fahrer einen komplexeren Sachverhalt bezüglich seines Fahrzeugs zu erklären, der sich auf verschiedene Fahrzeugeinrichtungen beziehen kann. Beispielsweise kann dem Fahrer über ein vorgegebenes Symbol 113 oder 114 angezeigt werden, dass eine Fahrzeugtür 110 nicht verschlossen oder ein Fahrzeugfenster noch geöffnet ist. Zusätzlich kann die Anzeige auf dem Display 112 dabei Informationen über die Öffnungspositionen aller Fenster des Fahrzeugs beinhalten.

Bezüglich einer Aktivierung des Displays 112 sind mehrere Möglichkeiten denkbar. Je nach Ausführungsart der vorliegenden Erfindung kann das Display 112 beispielsweise nur in den Situationen aktiviert werden, wenn tatsächlich eine Tür oder ein Fenster nicht geschlossen ist. Alternativ dazu kann das Display 112 auch so gesteuert werden, dass eine Anzeige nur unter der Voraussetzung, dass alle Türen und alle Fenster des Fahrzeugs geschlossen sind, erfolgt. Über beide Möglichkeiten kann verhindert werden, dass der Fahrer das Fahrzeug verriegelt und weggeht ohne zu bemerken, dass beispielsweise auf der Beifahrerseite hinten ein Fenster noch offen ist.

Als weitere Fahrzeugeinrichtungen zur Anzeige in dem Display 112 sind auch ein Schiebedach, ein Heckdeckel oder die Füllung des Benzintanks des Fahrzeugs möglich. So kann ein Fahrer beim Einsteigen oder beim Aussteigen seines Fahrzeugs beispielsweise daran erinnert werden, dass ein gewisser Füllstand seines Benzintanks unterschritten ist. Auch ein Vergessen des ID-Gebers im Fahrzeug kann dem Fahrer über das Display 112 angezeigt werden. Somit kann verhindert werden, dass der Fahrer sein Fahrzeug mit dem sich darin befindenden ID-Geber verlässt und unbewusster Weise einen Diebstahl riskiert.

Beim Aufschließen und beim Verriegeln eines Fahrzeugs über einen ID-Geber können ebenso die ablaufenden Verfahrensschritte über das Display 112 angezeigt werden. Beispielsweise kann der Benutzer über das Display 112 darüber informiert werden, dass kein gültiger ID-Geber im Nachweisbereich gefunden wurde. Weist der ID-Geber einen niedrigen Batteriestand auf, so wird dies dem Fahrer ebenso über das Display 112 gemeldet.

### Bezugszeichenliste

- 1: Fahrzeug
- 2: erste Übertragungseinrichtung
- 3: zweite Übertragungseinrichtung
- 4: Fahrzeug
- 5,6: Umfelderfassungssensoren
- 7 bis 10: Berührungssensoren
- 11,12: Außenspiegel
- 20: erstes elektromagnetisches Feld
- 23: Überlappungsgebiet
- 30: zweites elektromagnetisches Feld
- 50a,50b,60: Detektionsbereiche
- 101: Intelligenter Funkschlüssel
- 102 bis 104: Tasten
- 105: LC-Display
- 106 bis 109: Leuchtmarkierungen
- 110: Fahrzeugtür
- 111: Türbrüstung
- 112: Display
- 113 und 114: Symbole
- 115: Türgriff
- S1 Scan: Fahrertür I1
- S2: ID-Geber gefunden?
- S3: Zentralverriegelung reagiert nicht
- S4: Scan BeifahrertürI2
- S5: ID-Geber gefunden?
- S6: ID-Geber befindet sich auf Fahrerseite
- S7: ID-Geber befindet sich auf Beifahrerseite

## Patentansprüche

1. Schließsystem für ein Fahrzeug (1) mit
- einer in das Fahrzeug auf der Fahrerseite integrierten, ersten Übertragungseinrichtung (2) zum Erzeugen eines ersten elektromagnetischen Felds (20) zur Ermittlung einer Zugangsberechtigung und
- einer in das Fahrzeug (1) auf der Beifahrerseite integrierten, zweiten Übertragungseinrichtung (3)
- zum Erzeugen eines zweiten elektromagnetischen Felds (30) zur Ermittlung der Zugangsberechtigung,
wobei
- von der ersten Übertragungseinrichtung (2) das erste elektromagnetische Feld (20) mit einem ersten vorgegebenen elektrischen Strom (I1) und
- von der zweiten Übertragungseinrichtung (3) das zweite elektromagnetische Feld (30) mit einem vom ersten abweichenden, zweiten vorgegebenen elektrischen Strom (I2) erzeugt wird,
**dadurch gekennzeichnet, dass**
- das Schließsystem erfasst, ob ein Zugangselement von nur einem der ersten und zweiten elektromagnetischen Felder (20, 30) oder sowohl von dem ersten elektromagnetischen Feld (20) als auch von dem zweiten elektromagnetischen Feld (30) angesteuert wird, und abhängig davon erkennt, ob das Zugangselement auf einer Fahrerseite oder auf einer Beifahrerseite des Fahrzeugs angeordnet ist.

2. Schließsystem nach Anspruch 1, **dadurch gekennzeichnet, dass** der erste Strom (I1) eine höhere vorgegebene Stromstärke als der zweite Strom (I2) aufweist.

3. Schließsystem nach einem der vorgehenden Ansprüche, **dadurch gekennzeichnet, dass** der erste Strom (I1) eine andere Frequenz als der zweite Strom (I2) besitzt und/oder der erste Strom (I1) gegenüber einem Referenzsignal eine andere Phase als der zweite Strom (I2) besitzt.

4. Schließsystem nach einem der vorhergehenden Ansprüche, wobei das Schließsystem als das Zugangselement ein fahrzeugexternes Zugangselement zum Detektieren der von den Übertragungseinrichtungen (2, 3) erzeugten elektromagnetischen Felder (20, 30) aufweist, wobei in dem Zugangselement eine Feldstärke ermittelbar oder ein entsprechendes Detektionssignal mit einem Schwellwert vergleichbar ist.

5. Schließsystem nach einem der vorhergehenden Ansprüche, **dadurch gekennzeichnet, dass** das Schließsystem eingerichtet ist, um das zweite elektromagnetische Feld (30) nur dann zu erzeugen, wenn eine Anwesenheit des Zugangselements in einem Ausbreitungsbereich des ersten elektromagnetischen Felds (20) erfasst wurde.

6. Schließsystem nach einem der vorhergehenden Ansprüche, **dadurch gekennzeichnet, dass** eine Steuerelektronik eine Zentralverriegelung abhängig von einer erkannten Position des Zugangselements steuert.

7. Verfahren zur Ermittlung einer Zugangsberechtigung zu einem Fahrzeug durch
- Erzeugen (S1) eines ersten elektromagnetischen Felds (20) auf der Fahrerseite und
- Erzeugen (S4) eines zweiten elektromagnetischen Felds (30) auf der Beifahrerseite,
wobei
- das erste elektromagnetische Feld (20) mit einem ersten vorgegebenen elektrischen Strom (I1) und
- das zweite elektromagnetische(30) Feld mit einem vom ersten abweichenden, zweiten vorgegebenen elektrischen Strom (12) erzeugt wird,
**dadurch gekennzeichnet, dass**
- erfasst wird, ob ein Zugangselement von nur einem der ersten und zweiten elektromagnetischen Felder (20, 30) oder sowohl von dem ersten elektromagnetischen Feld (20) als auch von dem zweiten elektromagnetischen Felds (30) angesteuert wird, und dass abhängig davon erkannt wird, ob das Zugangselement auf einer Fahrerseite oder auf einer Beifahrerseite des Fahrzeugs angeordnet ist.

8. Verfahren nach Anspruch 7, **dadurch gekennzeichnet, dass** der erste Strom (I1) eine höhere vorgegebene Stromstärke als der zweite Strom (I2) aufweist.

9. Verfahren nach Anspruch 7 oder 8, wobei der erste Strom (I1) eine andere Frequenz als der zweite Strom (I2) besitzt und/oder der erste Strom (I1) gegenüber einem Referenzsignal eine andere Phase als der zweite Strom (I2) besitzt.

10. Verfahren nach einem der Ansprüche 7 bis 9, **dadurch gekennzeichnet, dass** das fahrzeugexterne Zugangselement die elektromagnetischen Felder detektiert, wobei die entsprechenden Feldstärken ermittelt oder die entsprechenden Detektionssignale mit einem Schwellwert verglichen werden.

11. Verfahren nach einem der Ansprüche 7 bis 10, **dadurch gekennzeichnet, dass** das erste Feld in einer Fahrertür und das zweite Feld in einer Beifahrertür erzeugt wird.

12. Verfahren nach einem der Ansprüche 7 bis 11, **dadurch gekennzeichnet, dass** das erste elektromagnetische Feld für ein erstes Zeitintervall (S1, S2) und mindestens das zweite elektromagnetische Feld für ein zweites, an das erste anschließende Zeitintervall (S4, S5) erzeugt wird.

13. Verfahren nach einem der Ansprüche 7-12, **dadurch gekennzeichnet, dass** das zweite elektromagnetische Feld (30) nur dann erzeugt wird, wenn eine Anwesenheit des Zugangselements in einem Ausbreitungsbereich des ersten elektromagnetischen Felds (20) erfasst wurde.

14. Verfahren nach einem der Ansprüche 7 bis 13,
**gekennzeichnet durch**
- Erfassen einer Bewegung einer Person oder eines Objekts vor einer Berührung des Fahrzeugs (4) **durch** die Person oder das Objekt,
- Erfassen einer Zugangsberechtigung, ausgelöst **durch** die erfasste Bewegung
und
- Ausgeben eines Steuerbefehls an ein Schließsystem in Abhängigkeit der erfassten Bewegung und der erfassten Zugangsberechtigung

15. Verfahren nach einem der Ansprüche 7 bis 14, **dadurch gekennzeichnet, dass** eine Zentralverriegelung abhängig von einer erkannten Position des Zugangselements gesteuert wird.

## Claims

1. Locking system for a vehicle (1), having
- a first transmission device (2), which is integrated in the vehicle on the driver's side, for generating a first electromagnetic field (20) for determining access authorization, and
- a second transmission device (3), which is integrated in the vehicle (1) on the passenger's side, for generating a second electromagnetic field (30) for determining access authorization,
wherein
- the first electromagnetic field (20) is generated by the first transmission device (2) with a first predefined electric current (I1) and
- the second electromagnetic field (30) is generated by the second transmission device (3) with a second predefined electric current (I2) which differs from the first electric current,
**characterized in that**
- the locking system detects whether an access element is actuated by only one of the first and second electromagnetic fields (20, 30) or both by the first electromagnetic field (20) and by the second electromagnetic field (30) and, as a function of the result, identifies whether the access element is arranged on a driver's side or on a passenger's side of the vehicle.

2. Locking system according to Claim 1, **characterized in that** the first current (I1) has a higher predefined current intensity than the second current (I2).

3. Locking system according to either of the preceding claims, **characterized in that** the first current (I1) has a different frequency to the second current (I2) and/or the first current (I1) has a different phase to the second current (12) in relation to a reference signal.

4. Locking system according to one of the preceding claims, wherein the locking system has, as the access element, an access element, which is outside the vehicle, for detecting the electromagnetic fields (20, 30) which are generated by the transmission devices (2, 3), wherein a field strength can be determined or a corresponding detection signal can be compared with a threshold value in the access element.

5. Locking system according to one of the preceding claims, **characterized in that** the locking system is designed to generate the second electromagnetic field (30) only when a presence of the access element has been detected in a propagation region of the first electromagnetic field (20).

6. Locking system according to one of the preceding claims, **characterized in that** a control electronics system controls a central locking system as a function of an identified position of the access element.

7. Method for determining access authorization to a vehicle by
- generating (S1) a first electromagnetic field (20) on the driver's side, and
- generating (S4) a second electromagnetic field (30) on the passenger's side,
wherein
- the first electromagnetic field (20) is generated with a first predefined electric current (I1) and
- the second electromagnetic field (30) is generated with a second predefined electric current (I2) which differs from the first electric current,
**characterized in that**
- the method involves detecting whether an access element is actuated by only one of the first and second electromagnetic fields (20, 30) or both by the first electromagnetic field (20) and by the second electromagnetic field (30) and, as a function of the result, identifying whether the access element is arranged on a driver's side or on a passenger's side of the vehicle.

8. Method according to Claim 7, **characterized in that** the first current (I1) has a higher predefined current intensity than the second current (I2).

9. Method according to Claim 7 or 8, wherein the first current (I1) has a different frequency to the second current (I2) and/or the first current (I1) has a different phase to the second current (I2) in relation to a reference signal.

10. Method according to one of Claims 7 to 9, **characterized in that** the access element, which is outside the vehicle, detects the electromagnetic fields, wherein the corresponding field strengths are determined or the corresponding' detection signals are compared with a threshold value.

11. Method according to one of Claims 7 to 10, **characterized in that** the first field is generated in a driver's door and the second field is generated in a passenger's door.

12. Method according to one of Claims 7 to 11, **characterized in that** the first electromagnetic field is generated for a first time interval (S1, S2) and at least the second electromagnetic field is generated for a second time interval (S4, S5) which follows the first time interval.

13. Method according to one of Claims 7-12, **characterized in that** the second electromagnetic field (30) is generated only when a presence of the access element has been detected in a propagation region of the first electromagnetic field (20).

14. Method according to one of Claims 7 to 13, **characterized by**
- detection of a movement of a person or an object before the person or the object makes contact with the vehicle (4),
- detection of access authorization, initiated by the detected movement, and
- outputting of a control command to a locking system as a function of the detected movement and the detected access authorization.

15. Method according to one of Claims 7 to 14, **characterized in that** a central locking system is controlled as a function of an identified position of the access element.

## Revendications

1. Système de fermeture pour un véhicule (1) comprenant
- un premier dispositif de transmission (2), intégré dans le véhicule du côté du conducteur, pour produire un premier champ électromagnétique (20) afin de déterminer une autorisation d'accès et
- un deuxième dispositif de transmission (3), intégré dans le véhicule (1) du côté du passager, pour produire un deuxième champ électromagnétique (30) afin de déterminer l'autorisation d'accès,
avec lequel
- le premier champ électromagnétique (20) est produit par le premier dispositif de transmission (2) avec un premier courant (I1) électrique prédéfini et
- le deuxième champ électromagnétique (30) est produit par le deuxième dispositif de transmission (3) avec un deuxième courant (I2) électrique prédéfini différent du premier courant,
**caractérisé en ce que**
- le système de fermeture détecte si un élément d'accès est commandé par un seul parmi le premier et le deuxième champs électromagnétiques (20, 30) ou à la fois par le premier champ électromagnétique (20) et le deuxième champ électromagnétique (30) et, suivant le résultat, détecte si l'élément d'accès est disposé sur un côté conducteur ou sur un côté passager du véhicule.

2. Système de fermeture selon la revendication 1, **caractérisé en ce que** le premier courant (I1) présente une intensité de courant prédéfinie supérieure à celle du deuxième courant (I2).

3. Système de fermeture selon l'une des revendications précédentes, **caractérisé en ce que** le premier courant (I1) possède une fréquence différente de celle du deuxième courant (12) et/ou le premier courant (I1) possède une phase différente de celle du deuxième courant (12) par rapport à un signal de référence.

4. Système de fermeture selon l'une des revendications précédentes, le système de fermeture présentant comme élément d'accès un élément d'accès externe au véhicule pour détecter les champs. électromagnétiques (20, 30) produits par les dispositifs de transmission (2, 3), une intensité de champ pouvant être déterminée dans l'élément d'accès ou un signal de détection correspondant prouvant être comparé avec une valeur de seuil.

5. Système de fermeture selon l'une des revendications précédentes, **caractérisé en ce que** le système de fermeture est configuré pour ne produire le deuxième champ électromagnétique (30) que lorsqu'une présence de l'élément d'accès a été détectée dans une zone de déploiement du premier champ électromagnétique (20).

6. Système de fermeture selon l'une des revendications précédentes, **caractérisé en ce qu'**une électronique de commande commande un dispositif de verrouillage central en fonction d'une position détectée de l'élément d'accès.

7. Procédé de détermination d'une autorisation d'accès à un véhicule en
- produisant (S1) un premier champ électromagnétique (20) du côté du conducteur et
- produisant (S4) un deuxième champ électromagnétique (30) du côté du passager,
selon lequel
- le premier champ électromagnétique (20) est produit avec un premier courant (I1) électrique prédéfini et
- le deuxième champ électromagnétique (30) est produit avec un deuxième courant (I2) électrique prédéfini différent du premier,
**caractérisé en ce que**
- on détecte si un élément d'accès est commandé par un seul parmi le premier et le deuxième champs électromagnétiques (20, 30) ou à la fois par le premier champ électromagnétique (20) et le deuxième champ électromagnétique (30) et que, suivant le résultat, on détecte, si l'élément d'accès est disposé sur un côté conducteur ou sur un côté passager du véhicule.

8. Procédé selon la revendication 7, **caractérisé en ce que** le premier courant (I1) présente une intensité de courant prédéfinie supérieure à celle du deuxième courant (I2).

9. Procédé selon la revendication 7 ou 8, **caractérisé en ce que** le premier courant (I1) possède une fréquence différente de celle du deuxième courant (I2) et/ou le premier courant (I1) possède une phase différente de celle du deuxième courant (I2) par rapport à un signal de référence.

10. Procédé selon l'une des revendications 7 à 9, **caractérisé en ce que** l'élément d'accès externe au véhicule détecte les champs électromagnétiques, les intensités de champ correspondantes étant déterminées ou les signaux de détection correspondants étant comparés avec une valeur de seuil.

11. Procédé selon l'une des revendications 7 à 10, **caractérisé en ce que** le premier champ est produit dans une portière de conducteur et le deuxième champ dans une portière de passager.

12. Procédé selon l'une des revendications 7 à 11, **caractérisé en ce que** le premier champ électromagnétique est produit pendant un premier intervalle de temps (S1, S2) et au moins le deuxième champ électromagnétique est produit pendant un deuxième intervalle de temps (S4, S5) connexe au premier.

13. Procédé selon l'une des revendications 7 à 12, **caractérisé en ce que** le deuxième champ électromagnétique (30) n'est produit que lorsqu'une présence de l'élément d'accès a été détectée dans une zone de déploiement du premier champ électromagnétique (20).

14. Procédé selon l'une des revendications 7 à 13, **caractérisé par** :
- la détection d'un mouvement d'une personne ou d'un objet avant un contact du véhicule (4) par la personne ou l'objet,
- la détection d'une autorisation d'accès, déclenchée par le mouvement détecté et
- la délivrance d'une instruction à un système de fermeture en fonction du mouvement détecté et de l'autorisation d'accès détectée.

15. Procédé selon l'une des revendications 7 à 14, **caractérisé en ce qu'**un dispositif de verrouillage central est commandé en fonction d'une position détectée de l'élément d'accès.
